# EUROPÄISCHE PATENTSCHRIFT

(11) **EP 3 000 299 B1**
(45) Veröffentlichungstag und Bekanntmachung des Hinweises auf die Patenterteilung: **22.02.2017**
(21) Anmeldenummer: 15182126.1
(22) Anmeldetag: 24.08.2015
(51) Int. Cl.: A01C 7/10, A01C 5/06, A01C 7/08, A01C 7/04, A01C 7/16

(54) **VERTEILVORRICHTUNG FÜR KÖRNIGES GUT**
DISTRIBUTION DEVICE FOR GRANULAR MATERIALS
DISPOSITIF DE DISTRIBUTION POUR MARCHANDISES EN GRAINS

(30) Priorität: 26.09.2014 DE 102014114028
(43) Veröffentlichungstag der Anmeldung: 30.03.2016
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes

(56) Entgegenhaltungen:
- EP-A1- 0 255 630
- DE-B3-102013 215 183
- US-A1- 2012 227 647

## Beschreibung

Die vorliegende Erfindung betrifft eine Verteilvorrichtung zur Dosierung von körnigem Gut wie Samenkörner, Dünger o. dgl. mit den Merkmalen des unabhängigen Anspruchs 1. Die Erfindung betrifft zudem ein Verfahren zum Ausbringen von granulatartigem Verteilgut, insbesondere von körnigem Saatgut, Dünger o. dgl., mit den Merkmalen des unabhängigen Verfahrensanspruchs 5.

Aus dem Stand der Technik sind verschiedene Ansätze bekannt, die Drillsaat dahingehend zu verbessern, dass die Aussaat gleichmäßiger erfolgt. Das wichtigste Ziel, das hierbei verfolgt wird, besteht darin, die Kornabstände innerhalb der Reihe nicht zu stark variieren zu lassen, um sich damit einer Einzelkornsaat zumindest grob anzunähern.

Die DE 10 2013 215 183 B3 offenbart ein Verfahren und eine Vorrichtung zur Dosierung von körnigem Gut wie Samenkörner, Dünger etc. Hierbei wird das durch eine Luftströmung getragene und beförderte körnige Gut durch eine Zuführleitung in ein Dosieraggregat geleitet, wo eine elektromotorisch angetriebene Förder- oder Fächerscheibe konzentrisch rotiert. Auf Grundlage eines erfassten Drehmoments des elektromotorischen Antriebs kann deren Antriebsdrehzahl erhöht oder reduziert werden.

Da es jedoch bei stärkeren Schwankungen im Korntransport unter Umständen zu Verstopfungen im Dosieraggregat kommen kann, da dessen Drehzahlvariation in solchen Situationen zu träge erfolgt, ist es wünschenswert, für die Regelung weitere Parameter zu berücksichtigen. Aus diesem Grund besteht das Ziel der vorliegenden Erfindung darin, die Regelungsgüte und damit die Gleichmäßigkeit der Korndosierung bei einer solchen Vorrichtung, wie sie aus der DE 10 2013 215 183 B3 bekannt ist, zu verbessern.

Dieses Ziel wird mit dem Gegenstand des unabhängigen Anspruchs 1 dadurch erreicht, dass jedem Dosieraggregat mindestens ein Kornflusssensor vorgeordnet wird, der sich in einer Zuführleitung oder bspw. in einer Verteileinheit wie bspw. einem Verteilerturm befinden kann. Die Daten des Kornflusssensors, der typischerweise durch einen Prallsensor gebildet sein kann, insbesondere durch einen piezoelektrisch arbeitenden Prallsensor, werden regeltechnisch zur Variation der Drehzahl des elektrischen Antriebsmotors des Dosieraggregats verwendet, so dass die Förder- oder Fächerscheibe schneller oder langsamer rotiert, um auf starke Schwankungen im Kornfluss besser reagieren zu können, und um unerwünschte Stauungen oder Verstopfungen aufgrund zu hohen Kornaufkommens zu vermeiden.

Wie erwähnt, wird das aktuelle Antriebsmoment des elektrischen Antriebsmotors dadurch bestimmt bzw. hergeleitet, dass dessen elektrische Stromaufnahme gemessen wird, da diese einen unmittelbaren Rückschluss auf die Motorwiderstände und damit auf das aufzuwendende Motormoment zulässt. Das Ziel einer besseren Vergleichmäßigung des ausgebrachten Saatgutes kann durch eine Anpassung der Motordrehzahl auf Grundlage des erfassten Antriebsmoments erreicht werden, wodurch stärkere Schwankungen in der Ausbringmenge eines einzelnen Dosierers in gewünschter Weise ausgeglichen bzw. unterdrückt werden können. Zwar können auf diese Weise die Ausbringmengen zwischen den einzelnen Reihen weiterhin variieren, doch wird das Ziel der optimierten und möglichst nicht schwankenden Kornabstände innerhalb der Reihe erreicht.

Die Versorgung der Dosierer erfolgt über die bereits vorhandene Luftversorgung einer pneumatischen Sämaschine, die typischerweise einen zentralen Verteilerkopf mit flexiblen Saatleitungen zu den einzelnen Säscharen aufweist. Mit diesem Pneumatiksystem werden alle Schare und Dosierer möglichst gleichmäßig mit Saatgut versorgt. Innerhalb dieser flexiblen Saatleitungen sind die einzelnen Dosierer platziert, typischerweise nah an den Säscharen, da die Fallrohre zu den Säscharen normalerweise die Ausgangsleitungen der Dosierer sind.

Zusätzlich sind in den Fallrohren Kornsensoren zur Überwachung der vom Dosierer abgegebenen Kornmengen angeordnet, so dass diese Sensorwerte zur weiteren Regelung der Antriebsmotoren verwendet werden können.

Die beschriebene Dosiervorrichtung eignet sich insbesondere zur Platzierung in kornführenden Leitungen, insbesondere in Saatleitungen einer an sich bekannten Sämaschine, insbesondere einer solchen, die pneumatisch fördert. In jeder Saatleitung kann eine solche Dosiervorrichtung angeordnet sein, wo sie für eine Sicherstellung einer annähernd vereinzelten Saatgutverteilung sorgen kann. Damit handelt es sich bei der Dosiervorrichtung um ein Anbaugerät, das für die Ergänzung einer existierenden Sämaschine geeignet ist und diese zu einer Einzelkornsämaschine macht.

Die Luftströmung trägt und befördert das körnige Gut während seines gesamten Transports vom Kornvorrat bis zur Säschar, wobei die Luftströmung innerhalb des Dosieraggregats in einem ungefähr kreisbogenförmigen Verlauf geführt wird und tangential in eine sich an das Dosieraggregat anschließende und zumindest abschnittsweise leicht gekrümmt verlaufende Ausgangsleitung geleitet wird. Dabei kann vorgesehen sein, dass sich die Kreisbögen der Ausgangsleitung und der Innenmantelfläche des Dosieraggregats tangential berühren und die Luft- und Kornführungsverläufe stufen-/nahtlos ineinander übergehen. Außerdem ist ein Krümmungsradius der Ausgangsleitung zumindest in einem an das Dosieraggregat grenzenden Abschnitt annähernd konstant. Wahlweise kann vorgesehen sein, dass sich der Krümmungsradius der Ausgangsleitung mit steigendem Abstand vom Dosieraggregat stetig oder unstetig öffnet.

Bei einer Sämaschine mit einer Vielzahl derartiger Verteilvorrichtungen, die jeweils mit einem Dosieraggregat und einem vorgeordneten Kornflusssensor ausgestattet sind, werden alle relevanten Daten in einer elektronischen Regelungseinheit verarbeitet, so eine aktuelle Fahrgeschwindigkeit, die Antriebsdrehzahlen der rotierenden Förder- oder Fächerscheiben sowie die Kornflussdaten der Kornflusssensoren in den Zuleitungen zu den Dosieraggregaten. Alle verarbeiteten Daten können vorzugsweise gespeichert, ausgewertet und z.B. für eine Anzeigeeinheit oder für statistische Auswertungen hinsichtlich einer Kornverteilungsgüte o. dgl. verwendet werden.

Die Regelung der Dosieraggregate kann im Wesentlichen darauf beruhen, dass eine mittlere Umdrehungsgeschwindigkeit für den elektrischen Antriebsmotor der rotierenden Förder- oder Fächerscheibe vorgewählt wird, die in Abhängigkeit von den Messwerten des stromaufwärts angeordneten Kornflusssensors korrigiert bzw. angepasst wird. Zudem kann auf Basis des Messwertverlaufs eine Annäherung an einen idealen Wert für die Antriebsdrehzahl erfolgen, um damit den schwankenden oder in längeren Zeitintervallen sich verändernden Kornmengen besser Rechnung zu tragen.

Die Erfindung schlägt zur Erreichung des oben genannten Ziels weiterhin ein Verfahren zum Ausbringen von granulatartigem Verteilgut, insbesondere von körnigem Saatgut, Dünger o. dgl. vor, das insbesondere mittels einer Verteilvorrichung oder Sämaschine durchgeführt werden kann. Hierbei wird das körnige Gut oder Saatgut mittels einer Dosiereinheit einem Luftvolumenstrom gesteuert zugeteilt und mittels wenigstens einer stromabwärts der Dosiereinheit angeordneten Förderleitung zu wenigstens einer Säschar oder einer anderen bodennah angeordneten oder im Boden geführten Ausbringeinrichtungen für das Saatgut befördert. Das Verfahren sieht vor, dass weitgehend alle im Luftstrom bzw. im jeweiligen Teilstrom getragenen Körner des Saatguts oder Körnerstroms mittels wenigstens einer in einer Zuführleitung zwischen Säschar und Dosiereinheit angeordneten Sensoreinheit erfasst werden, wobei der Luftstrom mit den Körnern zu einem dieser Sensoreinheit nachgeordneten Dosieraggregat gefördert wird, wo die Körner bzw. das Saatgut mittels einer elektromotorisch mit regelbarer Drehzahl angetriebenen rotierenden Förder- oder Fächerscheibe in zumindest abschnittsweise kreisförmigen Bewegungsbahn geführt und/oder umgewälzt werden. Außerdem wird zumindest eine elektrische Stromaufnahme eines elektrischen Antriebsmotors für die innerhalb des Dosieraggregats rotierende Förder- oder Fächerscheibe erfasst, woraus ein wechselndes Drehmoment des elektrischen Antriebsmotors bzw. eine wechselnde oder schwankende Drehmomentanforderung an den elektrischen Antriebsmotor hergeleitet werden. Zudem werden elektrische Sensorsignale der wenigstens einen Sensoreinheit verarbeitet und daraus sowie aus den Stromaufnahmewerten für den elektrischen Antriebsmotor ein Steuersignal für den elektrischen Antriebsmotors des Dosieraggregats zur Erhöhung oder Reduzierung der Antriebsdrehzahl der rotierenden Förder- oder Fächerscheibe generiert.

Das Verfahren kann vorsehen, dass der jeweilige Teil des Luftvolumenstroms mit dem darin beförderten Saatgut oder den darin beförderten Körnern auf die als Prallsensor ausgebildete Sensoreinheit geleitet wird, und dass der jeweilige Teil des Luftvolumenstroms mit dem darin beförderten Saatgut oder den darin beförderten Körnern unter Kontaktierung weitgehend aller im jeweiligen Teilstrom getragenen Körner auf den Prallsensor auftrifft. Außerdem kann vorgesehen sein, dass die Signale der wenigstens einen Sensoreinheit bzw. des wenigstens einen Prallsensors und die Stromverbrauchssignale des elektrischen Antriebsmotors des Dosieraggregats mittels einer elektronischen Regelungseinrichtung verknüpft werden, welche aus diesen Signalen ein variables Drehzahlsteuersignal zur Variation des Durchflusses des Dosieraggregats in Abhängigkeit von einem gemessenen Kornvolumen in der Förderleitung stromaufwärts des Dosieraggregats bildet.

Das vorgeschlagene Regelungsverfahren für die Dosieraggregate einer Sä-, Verteil- oder Ausbringvorrichtung ermöglicht die Abschätzung einer sinnvollen Größenordnung für eine Antriebsdrehzahl und die Vorwahl einer mittleren Umdrehungsgeschwindigkeit für den elektrischen Antriebsmotor der rotierenden Förder- oder Fächerscheibe. Gleichzeitig kann diese mittlere Drehzahl auf Grundlage von den Messwerten des stromaufwärts angeordneten Kornflusssensors ständig korrigiert bzw. angepasst werden. Zudem kann auf Basis des Messwertverlaufs eine Annäherung an einen idealen Wert für die Antriebsdrehzahl erfolgen, um damit den schwankenden oder in längeren Zeitintervallen sich verändernden Kornmengen besser Rechnung tragen zu können, so dass insgesamt eine optimierte Annäherung an eine Einzelkornsaat ermöglicht ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Darstellung einer pneumatisch arbeitenden Sämaschine mit volumetrisch dosiertem Saatgut, das über einen Zentralverteiler zu einzelnen Saatleitungen mit mündungsseitig daran angeordneten Säscharen geführt wird.

Fig. 2 zeigt ein schematisches Blockschaltbild eines komplexeren Regelungszusammenhangs zur Regelung der Dosieraggregate, die Teil der Sämaschine gemäß Fig. 1 sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

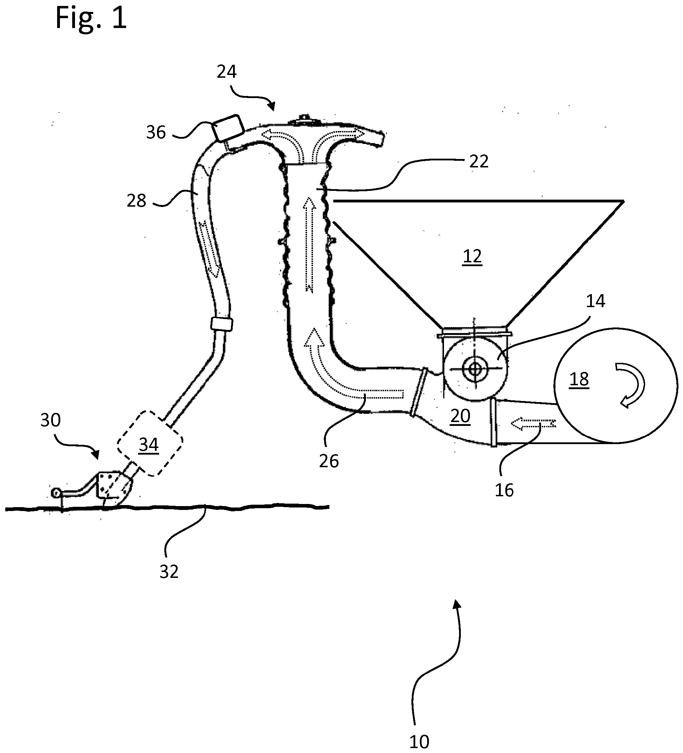

Die schematische Darstellung der Fig. 1 zeigt eine pneumatisch arbeitende Sämaschine 10 zum Ausbringen von volumendosiertem Saatgut, welches über einen Zentralverteiler zu einzelnen Saatleitungen mit mündungsseitig daran angeordneten Säscharen geführt wird. Die beispielhaft und schematisch gezeigte Sämaschine 10 weist einen trichterförmigen Vorratsbehälter 12 für körniges Gut, insbesondere für Saatgut auf, an dessen Unterseite sich eine Dosiereinrichtung 14 befindet, die das körnige Gut bzw. das Saatgut in einen Luftstrom 16 dosiert, der von einem Gebläse 18 erzeugt und in eine Luftleitung 20 befördert wird, die zu einem senkrecht angeordneten Steigrohr 22 führt. An einer Oberseite des Steigrohrs 22 - dies kann bspw. ein sog. Wellrohr o. dgl. sein - befindet sich ein Zentralverteiler 24, der den körnertragenden Luftstrom 26 annähernd gleichmäßig zu einer Vielzahl von Saatleitungen 28 verteilt. Die einzelnen Saatleitungen 28, von denen der besseren Übersichtlichkeit halber nur eine dargestellt ist, münden jeweils an Säscharen 30, mit denen das Saatgut in den Ackerboden 32 eingebracht wird. Die Zudosierung des vom Vorratsbehälter 12 in den Luftstrom 16 abgegebenen Saatgutes oder körnigen Gutes kann wahlweise nach dem Venturi-Prinzip oder auch durch Unterstützung des unter Druck stehenden, im geschlossenen Drucktank 12 befindlichen Saatgutes erfolgen.

Wie es die Fig. 1 erkennen lässt, befindet sich innerhalb der Saatleitung 28, typischerweise in unmittelbarer Nähe zur Säschar 30, ein Dosieraggregat 34, das dafür sorgt, dass die Säschar 30 mit körnigem Gut bzw. mit Saatgut beaufschlagt wird, das in annähernd gleichen Kornabständen und mit weitgehend jeweils gleichen Fördergeschwindigkeiten in den Ackerboden 32 abgegeben wird. Da bei einer realen Sämaschine eine Vielzahl solcher paralleler Säscharen 30 vorgesehen ist (z.B. vierundzwanzig, zweiunddreißig oder mehr), die jeweils mit separaten Saatleitungen 28 verbunden und von diesen versorgt sind, ist auch eine entsprechende Anzahl von erfindungsgemäßen, jeweils gleichartig aufgebauten Dosieraggregaten 34 vorgesehen, da jede einzelne Saatleitung 28 ein solches Dosieraggregat 34 aufweist.

Weiterhin zeigt die Fig. 1 eine angedeutete Sensoreinheit 36, die im Bereich des Zentralverteilers 24 angeordnet ist und die insbesondere für jede Saatleitung 28 durch jeweils einen Prallsensor o. dgl. gebildet ist, auf den der jeweilige Teil des Luftvolumenstroms 26 mit dem darin beförderten Saatgut unter Kontaktierung weitgehend aller im jeweiligen Teilstrom getragenen Körner auftrifft. Besonders geeignet als Prallsensoren der Sensoreinheiten 36 sind solche mit piezoelektrisch arbeitenden Sensorflächen, die ausreichend empfindlich sind, um jeden Aufprall eines Saatkorns zuverlässig zu reagieren und von Kontaktierungen leichterer Partikel wie Stroh oder anderen Verunreinigungen im Saatgut zu unterscheiden, so dass sehr exakte Sensorsignale damit erzeugt werden können.

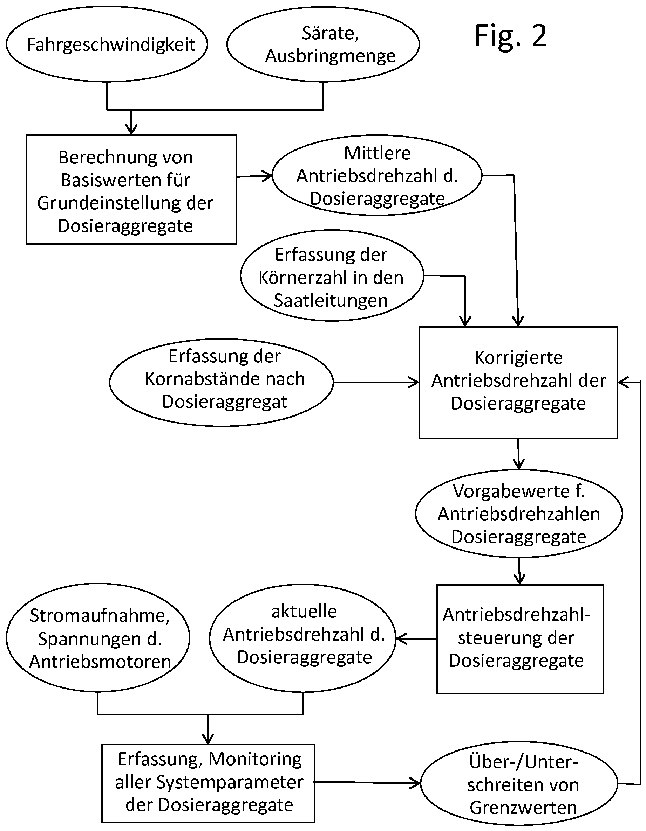

Für die exakte Regelung des Dosieraggregats 34 und der von diesem zur Säschar 30 beförderten Saatmenge sowie für die Einhaltung der gewünschten Kornabstände bei der Ausbringung des Saatguts ist es wichtig, dass in den Saatleitungen 28 die Sensoreinheiten 36 jeweils stromaufwärts angeordnet sind und dass diesen Sensoreinheiten 36 die Dosieraggregate 34 jeweils nachgeordnet sind. Auf diese Weise kann eine Regelung gemäß Fig. 2 realisiert werden.

Weiterhin kann optional ein weiterer Sensor stromabwärts des Dosieraggregats 34, zwischen diesem und dem Säschar 30 angeordnet sein, der den Kornabstand erfasst.

Die in der Saatleitung 28 angeordneten Dosieraggregate 34 können insbesondere einen Aufbau und eine Funktionsweise gemäß der DE 10 2013 215 183 B3 aufweisen (vgl. dort die Fig. 2), auf deren Offenbarungsinhalt hiermit Bezug genommen wird.

Das schematische Blockschaltbild der Fig. 2 verdeutlicht den Aufbau einer Regelschaltung zur Verknüpfung der Sensorsignale der von den elektrischen Antriebsmotoren des Dosieraggregats 34 sensierbaren Stromsignale sowie der Sensorsignale der Sensoreinheiten 36, die zudem mit weiteren Signalen verknüpft werden, um die Dosieraggregate 34 in der gewünschten Weise zu regeln. Die in der Fig. 2 erkennbare Regelung der Antriebsgeschwindigkeiten der elektrischen Antriebsmotoren der Dosieraggregate 34 erfolgt für jedes einzelne dieser Aggregate jeder Saatreihe einer Sämaschine 10, die eine Vielzahl von Säreihen aufweist.

Die Fig. 2 lässt erkennen, dass zunächst auf Basis der gemessenen Fahrgeschwindigkeit der Sämaschine 10 sowie einer gewünschten Särate oder Ausbringmenge Basiswerte für eine Grundeinstellung der Dosieraggregate 34 berechnet werden. Hieraus werden Werte für mittlere Antriebsdrehzahlen der einzelnen Dosieraggregate 34 berechnet. Außerdem werden mittels der Sensoreinheiten 36 die Anzahlen der in den Saatleitungen 28 zu den Dosieraggregaten 34 geförderten Körner erfasst. Außerdem sorgen weitere Kornsensoren, die zwischen den Dosieraggregaten 34 und den Säscharen 30 angeordnet sein können, für eine Erfassung der Kornabstände bei der Abgabe der Körner aus den Dosieraggregaten 34 und vor ihrer Ablage im Boden 32. Aus diesen letztgenannten drei Werten wird eine ggf. korrigierte Antriebsdrehzahl für die Dosieraggregate errechnet bzw. ein Sollwert für die Antriebsdrehzahl berechnet. Dieser Vorgabewert wird einer Steuerungseinheit für die Antriebsdrehzahlsteuerung der Dosieraggregate zur Verfügung gestellt, woraus sich ein jeweils aktueller Steuerwert für die Antriebsdrehzahl jedes einzelnen Dosieraggregats 34 ergibt.

Darüber hinaus werden die Betriebsparameter der Antriebsmotoren der Dosieraggregate erfasst, nämlich deren aktuelle Spannungswerte und deren Stromaufnahme, da diese Werte einen Rückschluss auf das benötigte Drehmoment und damit auf den jeweiligen Füllgrad des Dosieraggregats erlauben. Diese Steuer- und Messwerte werden erfasst und können weiterverarbeitet und/oder angezeigt sowie gespeichert werden. D.h., es erfolgt eine Erfassung und/oder ein Monitoring der wichtigsten oder aller Systemparameter, die für die Steuerung und den Betrieb der Dosieraggregate relevant sind. Sobald feste oder variable und ggf. dynamisch vorgebbare Grenzwerte für Antriebsparameter bzw. Antriebsdrehzahlen der Dosieraggregate über- oder unterschritten werden, kann ein Regeleingriff erfolgen, was sich in einer korrigierten Antriebsdrehzahl der Dosieraggregate niederschlägt.

Alle diese erwähnten Schritte werden typischerweise zyklisch durchlaufen, wodurch sich eine präzise Regelung der Säaggregate ergibt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Sämaschine
- 12: Vorratsbehälter
- 14: Dosiereinrichtung
- 16: Luftstrom
- 18: Gebläse
- 20: Luftleitung
- 22: Steigrohr (Wellrohr)
- 24: Zentralverteiler, zentraler Verteiler
- 26: körnertragender Luftstrom, körnertragende Luftströmung
- 28: Saatleitung
- 30: Säschar
- 32: Boden, Ackerboden
- 34: Dosieraggregat
- 36: Sensoreinheit

## Patentansprüche

1. Verteilvorrichtung für granulatartiges Verteilgut, insbesondere für körniges Saatgut, Dünger o. dgl., insbesondere Sämaschine (10),
- mit einer Luftfördereinheit (18) zur Erzeugung eines Luftvolumenstroms (16) und wenigstens einer der Luftfördereinheit nachgeordneten Dosiereinheit (14) zur steuerbaren Zuteilung des Saatguts zum Luftvolumenstrom (16),
- und mit wenigstens einer Förderleitung (20, 22), die stromabwärts der Dosiereinheit (14) angeordnet ist und die endseitig mit wenigstens einer Säschar (30) oder einer anderen bodennah angeordneten oder im Boden geführten Ausbringeinrichtung für das Saatgut oder die Körner versehen ist,
**dadurch gekennzeichnet, dass** in der wenigstens einen Förderleitung (20, 22) wenigstens eine Sensoreinheit (36) zur Erfassung weitgehend aller im Luftstrom (26) bzw. im jeweiligen Teilstrom getragenen und diese Sensoreinheit (36) passierenden Körner des Saatguts angeordnet ist,
und mit einem dieser Sensoreinheit (36) nachgeordneten Dosieraggregat (34), das mit einer elektromotorisch mit regelbarer Drehzahl angetriebenen rotierenden Förder- oder Fächerscheibe zur zumindest abschnittsweise kreisförmigen Bewegung und/oder Umwälzung des Saatguts oder der Körner ausgestattet ist,
wobei eine elektronische Regelungseinrichtung zumindest eine elektrische Stromaufnahme eines elektrischen Antriebsmotors für die innerhalb des Dosieraggregats (34) rotierende Förder- oder Fächerscheibe zur Ableitung eines wechselnden Drehmoments des elektrischen Antriebsmotors bzw. einer wechselnden oder schwankenden Drehmomentanforderung an den elektrischen Antriebsmotor sowie elektrische Sensorsignale der wenigstens einen Sensoreinheit (36) verarbeitet und daraus ein Steuersignal für den elektrischen Antriebsmotors des Dosieraggregats (34) zur Erhöhung oder Reduzierung der Antriebsdrehzahl der rotierenden Förder- oder Fächerscheibe generiert.

2. Verteilvorrichtung nach Anspruch 1, bei der die wenigstens eine Sensoreinheit (36) einen Prallsensor umfasst, auf den der jeweilige Teil des Luftvolumenstroms (26) mit dem darin beförderten Saatgut bzw. den darin beförderten Körnern unter Kontaktierung weitgehend aller im jeweiligen Teilstrom getragenen Körner auftrifft.

3. Verteilvorrichtung nach Anspruch 2, bei der die elektronische Regelungseinrichtung die Signale der wenigstens einen Sensoreinheit (36) bzw. des wenigstens einen Prallsensors und die Stromverbrauchssignale des elektrischen Antriebsmotors des Dosieraggregats (34) verknüpft, um daraus ein variables Drehzahlsteuersignal zur Variation des Durchflusses des Dosieraggregats (34) in Abhängigkeit von einem gemessenen Kornvolumen in der Förderleitung stromaufwärts des Dosieraggregats (34) zu bilden.

4. Sä- oder Ausbringvorrichtung (10) für körniges Gut bzw. Saatgut mit einer Mehrzahl oder Vielzahl von nebeneinander befindlichen Reihen oder Säreihen mit jeweils einer Verteilvorrichtung gemäß einem der Ansprüche 1 bis 3, der jeweils ein Säschar (30) o. dgl. Vorrichtung zum Einbringen der Körner oder des Saatgutes in eine definierbare Ablagetiefe im Ackerboden (32) zugeordnet ist, welche Sä- oder Ausbringvorrichtungen und/oder Säschare (30) über jeweils separate Zuführleitungen (28) von wenigstens einem Kornvorratsbehälter (12) mit Körnern oder Saatgut versorgt werden, wobei jeder dieser Zuführleitungen (28) eine Sensoreinheit (36) zur Erfassung der im Teilstrom befindlichen Körner zugeordnet ist, wobei jede dieser Sävorrichtungen und/oder Säschare (30) mit jeweils einem Dosieraggregat (34) für körniges Gut oder Saatgut ausgestattet ist, und wobei jede Sensoreinheit (36) und jedes Dosieraggregat (34) jeweils signaltechnisch mit einer zentralen Regelungseinrichtung verbunden sind, welche die in den Zuführleitungen (28) erfassten Körnermengen sowie die in den Dosieraggregaten (34) erfassten Motordrehmomente verarbeitet, und welche die Kornabstände für jedes Dosieraggregat (34) durch Variation der Antriebsdrehzahlen der Antriebe unter Berücksichtigung von Sollwerten für die Kornabstände und/oder einer Längsverteilung der Körner einzelner, mehrerer oder aller Dosieraggregate (34) regelt.

5. Verfahren zum Ausbringen von granulatartigem Verteilgut, insbesondere von körnigem Saatgut, Dünger o. dgl., insbesondere mittels einer Verteilvorrichung oder Sämaschine (10), wobei das körnige Gut oder Saatgut mittels einer Dosiereinheit (14) einem Luftvolumenstrom (16) gesteuert zugeteilt und mittels wenigstens einer stromabwärts der Dosiereinheit (14) angeordneten Förderleitung (20, 22) zu wenigstens einer Säschar (30) oder einer anderen bodennah angeordneten oder im Boden geführten Ausbringeinrichtung für das Saatgut befördert wird,
**dadurch gekennzeichnet, dass** weitgehend alle im Luftstrom (26) bzw. im jeweiligen Teilstrom getragenen Körner des Saatguts oder Körnerstroms mittels wenigstens einer in einer Zuführleitung (28) zwischen Säschar (30) und Dosiereinheit (14) angeordneten Sensoreinheit (36) erfasst werden,
wobei der Luftstrom mit den Körnern zu einem dieser Sensoreinheit (36) nachgeordneten Dosieraggregat (34) gefördert wird, wo die Körner bzw. das Saatgut mittels einer elektromotorisch mit regelbarer Drehzahl angetriebenen rotierenden Förder- oder Fächerscheibe in einer zumindest abschnittsweisen kreisförmigen Bewegungsbahn geführt und/oder umgewälzt werden,
wobei zumindest eine elektrische Stromaufnahme eines elektrischen Antriebsmotors für die innerhalb des Dosieraggregats (34) rotierende Förder- oder Fächerscheibe erfasst und daraus ein wechselndes Drehmoment des elektrischen Antriebsmotors bzw. eine wechselnde oder schwankende Drehmomentanforderung an den elektrischen Antriebsmotor hergeleitet werden,
und wobei elektrische Sensorsignale der wenigstens einen Sensoreinheit (36) verarbeitet und daraus sowie aus den Stromaufnahmewerten des Antriebsmotors ein Steuersignal für den elektrischen Antriebsmotor des Dosieraggregats (34) zur Erhöhung oder Reduzierung der Antriebsdrehzahl der rotierenden Förder- oder Fächerscheibe generiert wird.

6. Verfahren nach Anspruch 5, bei dem der jeweilige Teil des Luftvolumenstroms (26) mit dem darin beförderten Saatgut oder den darin beförderten Körnern auf die als Prallsensor ausgebildete Sensoreinheit (36) geleitet wird, wobei der jeweilige Teil des Luftvolumenstroms (26) mit dem darin beförderten Saatgut oder den darin beförderten Körnern unter Kontaktierung weitgehend aller im jeweiligen Teilstrom getragenen Körner auf den Prallsensor auftrifft.

7. Verfahren nach Anspruch 5 oder 6, bei dem die Signale der wenigstens einen Sensoreinheit (36) bzw. des wenigstens einen Prallsensors und die Stromverbrauchssignale des elektrischen Antriebsmotors des Dosieraggregats (34) mittels einer elektronischen Regelungseinrichtung verknüpft werden, welche aus diesen Signalen ein variables Drehzahlsteuersignal zur Variation des Durchflusses des Dosieraggregats (34) in Abhängigkeit von einem gemessenen Kornvolumen in der Förderleitung stromaufwärts des Dosieraggregats (34) bildet.

## Claims

1. Distribution device for distributing material of a granular nature, in particular for granular seeds, fertilizer, or the like, in particular a sowing machine (10),
- with an air conveyor unit (18) for generating an air volume flow (16) and at least one metering unit (14) arranged downstream of the air conveyor unit for the controllable allocation of the granular material to the air volume flow (16),
- and with at least one conveyor line (20, 22), which is arranged downstream of the metering unit (14) and which is provided at the end with at least one seed drill coulter (30) or with another sowing device for the granular material or the grains arranged near ground level or being guided in the soil,
**characterized in that** in the least one conveyor line (20, 22) at least one sensor unit (36) is arranged, for detecting largely all grains from among the granular material being carried in the air stream (26) and/or in the respective partial flow, and passing this sensor unit (36),
and with a metering device (34) arranged downstream of this sensor unit (36), which metering device (34) is equipped with a conveyor disk or fan disk, which is electromotively settable in rotation at a regulatable rotational speed, for the circular movement and/or circulation of the granular material or the grains, at least in sections, wherein an electronic regulating device processes at least the electric current consumption of the electric drive motor for the conveyor disk or fan disk rotating within the metering device (34) for deriving a changing torque of the electric drive motor and/or a changing or fluctuating torque request on the electric drive motor as well as the electric sensor signals of the at least one sensor unit (36), and generates a control signal thereof for the electric drive motor of the metering device (34) for the increase or reduction of the drive speed of the rotating conveyor disk or fan disk.

2. Distribution device as recited in claim 1, in which the at least one sensor unit (36) comprises an impact sensor, which is impacted by the respective part of the air volume flow (26) with the grains being conveyed therein, with largely all of the grains that are being carried in the respective partial flow making contact.

3. Distribution device as recited in claim 2, in which the electronic regulating device links the signals of the at least one sensor unit (36) and/or of the at least one impact sensor with the power consumption signals of the electric drive motor of the metering device (34), in order to form a variable speed control signal thereof for varying the flow rate of the metering device (34) in dependence on a measured grain quantity in the conveyor line upstream of the metering device (34).

4. Sowing or spreading machine (10) for granular material or granular seeds with a plurality of rows or seed rows located next to each other, each with a distribution device as recited in one of claims 1 to 3, each of which is allocated a seed drill coulter (30) or a similar sowing device for placing the grains or granular seeds into the soil (32) at a definable placement depth, which sowing devices and/or seed drill coulters (30) are supplied with grains from at least one grain storage hopper (12) via respectively separate feed tubes (28), wherein a sensor unit (36) is allocated to each of these feed tubes (28) for detecting the grains located in the partial flow, wherein each of these sowing devices and/or seed drill coulters (30) is respectively equipped with a metering device (34) for granular material, and wherein each sensor unit (36) and each metering device (34) is respectively connected in signaling terms with a central regulating device, which processes the quantities of grains detected in the feed tubes (28) as well as the motor torques measured in the metering devices (34), and which regulates the grain spacing for each metering device (34) by varying the drive speeds of the drives under consideration of target values for the grain spacing and/or of target values of a longitudinal distribution of the grains from single, multiple, or all metering devices (34).

5. Method for spreading material of granular nature, in particular of granular seeds, fertilizer, or the like, in particular by means of a distribution device or sowing machine (10), wherein the granular material or the seeds are controllably allocated to an air volume flow (16) by means of a metering unit (14), and is conveyed with at least one conveyor line (20, 22), which is arranged downstream of the metering unit (14), to at least one seed drill coulter (30) or to another sowing device for the granular material arranged near ground level or being guided in the soil, **characterized in that** largely all grains of the granular material or grain flow carried within the air stream (26) and/or in the respective partial flow are detected by means of at least a sensor unit (36) arranged in a feed tube (28) between the seed drill coulter (30) and the metering unit (14),
wherein the air stream is conveyed with the grains to the metering device (34) arranged downstream of the sensor unit (36), where the grains and/or the granular material are guided and/or circulated in a movement which is circular at least in sections, with a conveyor disk or fan disk, which is electromotively settable in rotation at a regulatable rotational speed,
wherein at least the electric current consumption of the electric drive motor for the conveyor disk or fan disk rotating within the metering device (34) is detected and a changing torque of the electric drive motor and/or a changing or fluctuating torque request on the electric drive motor is derived thereof,
and wherein electric sensor signals of the at least one sensor unit (36) are generated, and a control signal for the electric drive motor of the metering device (34) for the increase or reduction of the drive speed of the rotating conveyor disk or fan disk is generated thereof as well as from the electric current consumption values of the drive motor.

6. Method as recited in claim 5, in which the respective part of the air volume flow (26) with the granular material conveyed therein or the grains conveyed therein is guided to the sensor unit (36) which is formed as an impact sensor, which is impacted by the respective part of the air volume flow (26) with the granular material being conveyed therein or the grains being conveyed therein, with largely all of the grains that are being carried in the respective partial flow making contact.

7. Method as recited in claim 5 or 6, in which the signals of the at least one sensor unit (36) and/or of the at least one impact sensor and the power consumption signals of the electric drive motor of the metering device (34) are linked by an electronic regulating device, in order to form a variable speed control signal thereof for varying the flow rate of the metering device (34) in dependence on a measured grain quantity in the conveyor line upstream of the metering device (34).

## Revendications

1. Dispositif de distribution pour des matières à distribuer de type granulés, en particulier pour des semences, engrais granulaires ou similaires, en particulier semoir (10),
- comprenant une unité de transport d'air (18) destinée à générer un débit volumique d'air (16) et au moins une unité de dosage (14) montée en aval de ladite unité de transport d'air et destinée à ajouter par dosage, de manière commandable, les semences au débit volumique d'air (16),
- et comprenant au moins une conduite de transport (20, 22) qui est disposée en aval de ladite unité de dosage (14) et qui est munie, à l'extrémité, d'au moins un soc semeur (30) ou d'un autre dispositif d'épandage pour les semences ou les grains qui est disposé à proximité du sol ou est guidé dans le sol,
**caractérisé par le fait que**
dans ladite au moins une conduite de transport (20, 22) est disposée au moins une unité capteur (36) qui est destinée à détecter dans une large mesure l'ensemble des grains des semences portés dans le courant d'air (26) ou bien dans le courant partiel respectif et passant à travers cette unité capteur (36),
et comprenant un groupe de dosage (34) qui est monté en aval de cette unité capteur (36) et qui est équipé d'un disque de transport ou en éventail tournant entraîné par moteur électrique à une vitesse de rotation réglable pour, au moins par sections, mouvoir circulairement et/ou faire retourner les semences ou les grains,
dans lequel un dispositif de réglage électronique traite au moins une consommation de courant électrique d'un moteur d'entraînement électrique pour le disque de transport ou en éventail tournant à l'intérieur du groupe de dosage (34), pour dériver un couple changeant du moteur d'entraînement électrique ou bien une exigence de couple changeant ou variable exigée du moteur d'entraînement électrique, ainsi que des signaux de capteur électriques de ladite au moins une unité capteur (36), et génère à partir de cela un signal de commande pour le moteur d'entraînement électrique du groupe de dosage (34) afin d'augmenter ou de réduire la vitesse de rotation d'entraînement du disque de transport ou en éventail tournant.

2. Dispositif de distribution selon la revendication 1, dans lequel ladite au moins une unité capteur (36) comprend un capteur d'impact contre lequel donne la partie respective du débit volumique d'air (26) avec les semences transportées dans celle-ci ou bien les grains transportés dans celle-ci, en contactant dans une large mesure l'ensemble des grains portés dans le courant partiel respectif.

3. Dispositif de distribution selon la revendication 2, dans lequel ledit dispositif de réglage électronique combine les signaux de ladite au moins une unité capteur (36) ou bien dudit au moins un capteur d'impact et les signaux de consommation de courant du moteur d'entraînement électrique du groupe de dosage (34) afin de former à partir de cela un signal de commande de vitesse de rotation variable pour faire varier le débit du groupe de dosage (34) en fonction d'un volume mesuré de grains dans la conduite de transport en amont du groupe de dosage (34).

4. Dispositif à semer ou d'épandage (10) pour des matières ou bien semences granulaires, comprenant une multitude ou une pluralité de rangées ou rangées de semis situées les unes à côté des autres et comprenant chacune un dispositif de distribution selon l'une quelconque des revendications 1 à 3, auquel est associé respectivement un soc semeur (30) ou dispositif similaire destiné à introduire les grains ou les semences dans une profondeur d'application définissable dans la terre arable (32), lesquels dispositifs à semer ou d'épandage et/ou socs semeurs (30) sont alimentés en grains ou semences à partir d'au moins un réservoir de grains (12) via des conduites d'alimentation (28) respectivement séparées, dans lequel à chacune de ces conduites d'alimentation (28) est associée une unité capteur (36) destinée à détecter les grains se trouvant dans le courant partiel, dans lequel chacun de ces dispositifs à semer et/ou socs semeurs (30) est équipé de respectivement un groupe de dosage (34) pour des matières ou semences granulaires, et dans lequel chaque unité capteur (36) et chaque groupe de dosage (34) est relié respectivement en technique de signal à un dispositif central de réglage qui traite les quantités de grains détectées dans les conduites d'alimentation (28) ainsi que les couples de moteur détectés dans les groupes de dosage (34) et qui règle les distances entre grains pour chaque groupe de dosage (34) par une variation des vitesses de rotation d'entraînement des mécanismes d'entraînement en prenant en considération des valeurs de consigne pour les distances entre grains et/ou une répartition longitudinale des grains de groupes à semer (34) individuels, de plusieurs ou de l'ensemble des groupes de dosage (34).

5. Procédé d'épandage de matières à distribuer de type granulés, en particulier de semences, engrais granulaires ou similaires, en particulier au moyen d'un dispositif de distribution ou d'une machine à semer (10), dans lequel les matières ou semences granulaires sont ajoutés par dosage, de manière commandée, à un débit volumique d'air (16) au moyen d'une unité de dosage (14) et sont transportées par l'intermédiaire d'au moins une conduite de transport (20, 22) disposée en aval de ladite unité de dosage (14) à au moins un soc semeur (30) ou à un autre dispositif d'épandage pour les semences qui est disposé à proximité du sol ou est guidé dans le sol,
**caractérisé par le fait que** dans une large mesure l'ensemble des grains des semences ou du courant de grains qui sont portés dans le courant d'air (26) ou bien dans le courant partiel respectif sont détectés au moyen d'au moins une unité capteur (36) disposée dans une conduite d'alimentation (28) entre le soc semeur (30) et l'unité de dosage (14),
dans lequel le courant d'air contenant les grains est transporté vers un groupe de dosage (34) monté en aval de cette unité capteur (36), où les grains ou bien les semences sont guidés sur un trajet de mouvement au moins par sections circulaire et/ou sont retournés au moyen d'un disque de transport ou en éventail tournant entraîné par moteur électrique à une vitesse de rotation réglable,
dans lequel au moins une consommation de courant électrique d'un moteur d'entraînement électrique pour le disque de transport ou en éventail tournant à l'intérieur du groupe de dosage (34) est détectée et on dérive à partir de celle-ci un couple changeant du moteur d'entraînement électrique ou bien une exigence de couple changeant ou variable exigée du moteur d'entraînement électrique,
et dans lequel des signaux de capteur électriques de ladite au moins une unité capteur (36) sont traités et on génère à partir de cela ainsi que des valeurs de consommation de courant du moteur d'entraînement un signal de commande pour le moteur d'entraînement électrique du groupe de dosage (34) afin d'augmenter ou de réduire la vitesse de rotation d'entraînement du disque de transport ou en éventail tournant.

6. Procédé selon la revendication 5, dans lequel la partie respective du débit volumique d'air (26) avec les semences transportées dans celle-ci ou bien les grains transportés dans celle-ci est dirigée sur l'unité capteur (36) réalisée en tant que capteur d'impact, dans lequel la partie respective du débit volumique d'air (26) avec les semences transportées dans celle-ci ou bien les grains transportés dans celle-ci donne contre le capteur d'impact en contactant dans une large mesure l'ensemble des grains portés dans le courant partiel respectif.

7. Procédé selon la revendication 5 ou 6, dans lequel les signaux de ladite au moins une unité capteur (36) ou bien dudit au moins un capteur d'impact et les signaux de consommation de courant du moteur d'entraînement électrique du groupe de dosage (34) sont combinés au moyen d'un dispositif de réglage électronique qui forme à partir de ces signaux un signal de commande de vitesse de rotation variable pour faire varier le débit du groupe de dosage (34) en fonction d'un volume mesuré de grains dans la conduite de transport en amont du groupe de dosage (34).
